# EUROPÄISCHE PATENTANMELDUNG

(11) **EP 4 120 069 A1**
(43) Veröffentlichungstag der Anmeldung: **18.01.2023**
(21) Anmeldenummer: 21185249.6
(22) Anmeldetag: 13.07.2021
(51) Int. Cl.: G06F 8/75

(54) **TRANSFORMATION EINER APPLIKATION IN EINE SEMANTISCHE BESCHREIBUNG**

(71) Anmelder: Siemens Aktiengesellschaft, 80333 München (DE)
(72) Erfinder: Drumm, Oliver, 76344 Eggenstein-Leopoldshafen (DE)

(57) **Zusammenfassung**

Vorgeschlagen wird ein Verfahren zur automatisierten Transformation einer Applikation (2) in eine semantische Beschreibungssprache, umfassend:
a) Auswahl eines objektorientiert strukturierten Quellcodes der Applikation (2), welcher Klassen mit verschiedenen Klassentypen umfasst,
b) Festlegen, welche in dem Quellcode verwendeten Klassen transformiert werden sollen, insbesondere alle Klassen des Quellcodes,
c) Transformation aller Typen von Klassen, wobei die Transformation jeweils von einem Basistyp ausgehend rekursiv von außen nach innen zu von dem Basistyp abgeleiteten Klassentypen erfolgt, und wobei die Transformation abgebrochen wird, sobald eine Variable in einer Typdefiniton einer Klasse einen einfachen Typ aufweist, wobei ein einfacher Typ durch ein Literal semantisch beschrieben wird, und wobei jeder Typ einer Klasse nur einmal transformiert wird, und wobei ein jeweiliger Name eines Types einer Klasse in eine Klasse und ein jeweiliger Variablenname in eine Eigenschaft gemäß der Web Ontology Language transformiert wird,
d) Anlegen von Instanzen der Klassentypen,
e) Transformation der Instanzen der Klassentypen, wobei die Transformation von einer Variablen ausgehend rekursiv von außen nach innen erfolgt, und wobei für jede Instanz eines Klassentyps eine Instanz gemäß der Web Ontology Language angelegt wird, und wobei Variable einfacher Klassentypen Werte von Literalen gemäß der Web Ontology Language bilden,
e) Hinterlegung der Ergebnisse der Transformation in einem Datenspeicher.

## Beschreibung

Die Erfindung betrifft ein Verfahren zur automatisierten Transformation einer Applikation in eine semantische Beschreibungssprache. Außerdem betrifft die Erfindung ein Automatisierungsgerät für eine technische Anlage. Zudem betrifft die Erfindung ein Computerprogramm, ein Speichermedium und ein Computersystem.

Semantische Beschreibungsmöglichkeiten dienen beispielsweise dazu, unterschiedlichste Informationen in einem Knowledge Graph zu verknüpfen und auswertbar zu machen. Um neue Applikationen und deren Inhalte in diesen Knowledge Graphen einbinden zu können, müssen deren Inhalte semantisch beschrieben werden.

Es ist bekannt, Informationen der Applikationen nachträglich semantisch zu modellieren. Über Schnittstellen werden dabei Daten exportiert und auf eine semantische Ebene gehoben. Dieser Vorgang bedeutet aber auch, dass das Informationsmodell der Applikation noch einmal manuell analysiert und semantisch nachmodelliert wird. Dies kann einen erheblichen Aufwand mit sich bringen, der oftmals mit Fehlern oder zu treffenden Vereinfachungen einhergeht.

Speziell bei der Planung einer technischen Anlage werden viele Informationen zusammengetragen. Ein semantischer Zugriff z.B. über die graphenbasierte Abfragesprache SPARQL ist aber nur selten möglich. Auch eine Anbindung an andere Ontologien ist nahezu unmöglich.

Um die Anlagendaten auf eine semantische Beschreibung zu heben, ist bislang eine manuelle Modellierung notwendig, die jedoch mit einem enormen Aufwand verbunden ist.

Der Erfindung liegt die Aufgabe zugrunde, ein Verfahren anzugeben, welches eine automatisierte Transformation eines Quellcodes eines Computerprogrammes in eine semantische Beschreibung gemäß dem World Wide Web Consortium (W3C) ermöglicht.

Die zuvor formulierte Aufgabe wird durch ein Verfahren zur automatisierten Transformation einer Applikation in eine semantische Beschreibungssprache gemäß Anspruch 1 gelöst. Das Verfahren umfasst erfindungsgemäß die folgenden Verfahrensschritte:
a) Auswahl eines objektorientiert strukturierten Quellcodes der Applikation, welcher Quellcode Klassen mit verschiedenen Klassentypen umfasst,
b) Festlegen, welche in dem Quellcode verwendeten Klassen transformiert werden sollen, insbesondere alle Klassen des Quellcodes,
c) Transformation aller Typen von Klassen, wobei die Transformation jeweils von einem Basistyp ausgehend rekursiv von außen nach innen zu von dem Basistyp abgeleiteten Klassentypen erfolgt, und wobei die Transformation abgebrochen wird, sobald eine Variable in einer Typdefiniton einer Klasse einen einfachen Typ aufweist, wobei ein einfacher Typ durch ein Literal semantisch beschrieben wird, und wobei jeder Typ einer Klasse nur einmal transformiert wird, und wobei ein jeweiliger Name eines Types einer Klasse in eine Klasse und ein jeweiliger Variablenname in eine Eigenschaft gemäß der Web Ontology Language transformiert wird,
d) Anlegen von Instanzen der Klassentypen,
e) Transformation der Instanzen der Klassentypen, wobei die Transformation von einer Variablen ausgehend rekursiv von außen nach innen erfolgt, und wobei für jede Instanz eines Klassentyps eine Instanz gemäß der Web Ontology Language (kurz: OWL) angelegt wird, und wobei Variable einfacher Klassentypen Werte von Literalen gemäß der Web Ontology Language (kurz: OWL) bilden,
e) Hinterlegung der Ergebnisse der Transformation in einem Datenspeicher.

Der Quellcode ist dabei vorteilhafterweise mittels der Programmiersprache C# erstellt worden.

Die Ergebnisse werden besonders bevorzugt in dem Turtle Format (Terse RDF Triple Language) in dem Datenspeicher hinterlegt.

Im Rahmen des Festlegens, welche in dem Quellcode verwendeten Klassen transformiert werden sollen, können die entsprechenden Klassen mit einem Attribut versehen werden, das sie als für die Transformation vorgesehen kennzeichnet. Dieses Vorgehen ist beispielsweise aus der Serialisierung einer Applikation in XML bekannt.

In einer semantischen Beschreibung nach den W3C Standards kommen Graphen zum Einsatz. Diese Graphen bestehen aus Triplets - Subjekt, Prädikat und Objekt. Die Subjekte und Objekte bilden Knoten und die Prädikate die Kanten im Graphen. RDF (Resource Description Framework), RDFS (Resource Description Framework Schema) und OWL (Web Ontology Language) sind standardisierte Festlegungen des W3C, um grundlegende Zusammenhänge zu beschreiben. Hierzu zählen "rdf:type" um Typen, "rdfs:subClassOf" um Unterklassen und "owl:class" um Klassen zu definieren.

Diese semantischen Beschreibungen lassen sich mit weiteren Beschreibungen durch Einführung weiter Prädikate verknüpfen, um Zusammenhänge herzustellen. Insgesamt führt das Vorgehen zu einer Anreicherung von semantischen Aussagen. Mittels Inferenz können logische Aussagen in diesem Grafen ermittelt und überprüft werden. Außerdem können Inhalte durch Abfragesprachen wie SPARQL ermittelt werden.

Durch das zuvor erläuterte erfindungsgemäße Verfahren wird eine semantische Serialisierung eines Quellcodes (einer Applikation) vorgestellt, die sowohl die Modellstruktur als auch die Instanzen des Quellcodes automatisiert in die semantische Beschreibungssprache OWL abbildet.

Hieraus ergeben sich folgende Vorteile:
- Das Modell einer Applikation (der Quellcode) und die Daten der Applikation (Instanziierung) erhalten automatisch eine semantische Repräsentanz, um diese z.B. mit anderen Ontologien zu verknüpfen.
- Das erfindungsgemäße Verfahren kann leicht durch eine Integration eines entsprechenden Programmcodes in einen bestehenden Quellcode umgesetzt werden, ohne den Quellcode anpassen zu müssen.

Bevorzugt ist die Applikation zum Betrieb eines Automatisierungsgeräts einer technischen Anlage verwendbar. Automatisierungsgeräte werden dabei zur Realisierung einer Automatisierung einer technischen Anlage benutzt und können beispielsweise speicherprogrammierbare Steuerungen oder Leitsysteme sein, die eine übergeordnete Steuerungsfunktion für untergeordnete speicherprogrammierbare Steuerungen darstellen. Es kann sich bei der Applikation beispielsweise um das Prozessleitsystem SIMATIC PCS7 der Firma SIEMENS bzw. um einen Teil dieses Prozessleitsystems handeln. Der Datenspeicher ist dabei bevorzugt auf dem Automatisierungsgerät realisiert. Es ist aber ebenfalls eine cloudbasierte Umgebung als Datenspeicher möglich.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem im vorliegenden Fall vorgesehenen Operator Station Server und dem Operator Station Client Sensoren zur Ermittlung von Messwerten sowie verschiedene Aktoren umfassen. Zudem kann das Leitsystem sogenannte prozessnahe Komponenten, die zur Ansteuerung der Aktoren bzw. Sensoren dienen, aufweisen. Darüber hinaus kann das Leitsystem u.a. Mittel zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Im Rahmen einer bevorzugten Weiterbildung der Erfindung wird die Transformation der instanziierten Klassen immer dann durchgeführt, wenn sich eine Änderung bei der Instanziierung der Klassen ergibt, insbesondere aufgrund der Handlungen eines Projekteurs eines Automatisierungsgerätes einer technischen Anlage, wobei die Applikation zum Betrieb des Automatisierungsgerätes der technischen Anlage verwendet wird. Hierdurch wird die in die semantische Beschreibungssprache transformierte Applikation mit der eigentlichen Applikation synchronisiert. Die Synchronisierung erfolgt aber vorteilhafterweise nur dann, wenn sich die Instanziierung der Applikation ändert. Alternativ oder zusätzlich ist es jedoch auch möglich, dass der Abgleich (durch die Transformation der instanziierten Klassen) in regelmäßigen Intervallen oder auf Anfrage durch einen Projekteur / Administrator / Operator oder dergleichen vorgenommen wird.

Die zuvor formulierte Aufgabe wird zudem gelöst durch ein Automatisierungsgerät für eine technische Anlage, das derart ausgebildet ist, dass ein Verfahren wie zuvor erläutert mit einer auf dem Automatisierungsgerät implementierten Applikation durchgeführt werden kann.

Zudem wird die Aufgabe gelöst durch ein Computerprogramm mit durch einen Computer ausführbaren Programmcodeanweisungen zur Implementierung des Verfahrens, durch ein Speichermedium mit dem durch einen Computer ausführbaren Computerprogramm und durch ein Computersystem, auf dem das Computerprogramm implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein erfindungsgemäßes Automatisierungsgerät in einer Prinzipskizze; und
- FIG 2: ein Ablaufdiagramm eines erfindungsgemäßen Verfahrens.

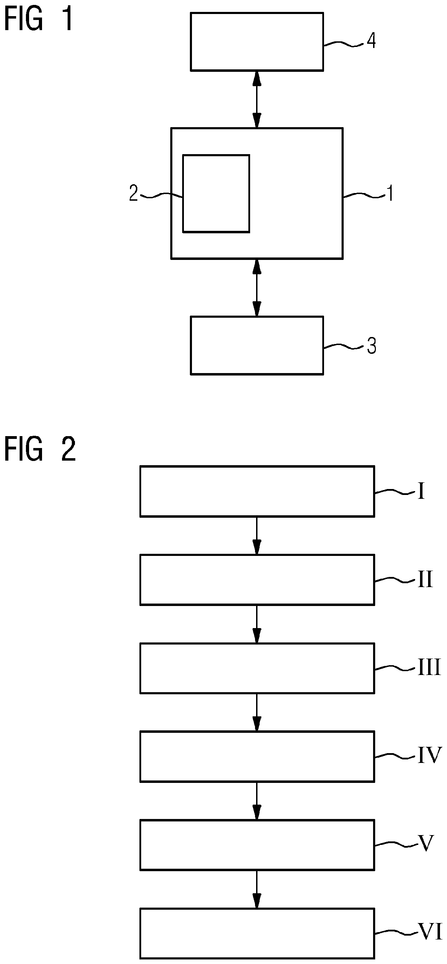

In FIG 1 ist ein Automatisierungsgerät 1 einer technischen Anlage, beispielsweise einer Fertigungs- oder Prozessanlage, dargestellt. Auf dem Automatisierungsgerät 1 ist eine Applikation 2 computerimplementiert, die zum Betrieb des Automatisierungsgeräts 1 verwendbar ist. Das Automatisierungsgerät 1 mit der Applikation 2 kann zur Steuerung eines technischen Prozesses der technischen Anlage verwendet werden. Hierzu kann das Automatisierungsgerät 1 auf technische Objekte 3 wie Sensoren und Aktoren zugreifen und mit übergeordneten Steuerungsinstanzen wie einem Operator Station Server 4 kommunizieren. Dieser Operator Station Server 4 kann beispielsweise Funktionalitäten zum Bedienen und Beobachten der technischen Anlage bereitstellen.

Die Applikation umfasst einen objektorientiert strukturierten Quellcode, der in der Programmiersprache C# entworfen worden ist. Der Quellcode umfasst Klassen, die (wenigstens zwei) verschiedene Klassentypen aufweisen. Im Folgenden wird der Ablauf eines erfindungsgemäßen Verfahrens zur Transformation erläutert.

In einem ersten Schritt I wird der Quellcode der Applikation ausgewählt. In einem zweiten Schritt II wird festgelegt, welche in dem Quellcode verwendeten Klassen transformiert werden sollen. Insbesondere werden alle Klassen des Quellcodes ausgewählt. Dabei wird unter einer Klasse ein Modell bzw. ein Bauplan für eine Reihe von ähnlichen Objekten verstanden.

In einem dritten Schritt III werden alle Typen von Klassen transformiert. Ein Klassentyp kann beispielsweise eine Linie oder ein Punkt sein, wobei die Klassentypen in der Regel frei definiert worden sind. Die Transformation erfolgt jeweils von einem Basistyp ausgehend rekursiv von außen nach innen zu von dem Basistyp abgeleiteten Klassentypen. "Von außen nach innen" bedeutet dabei, dass von dem die abgeleiteten Klassentypen "umklammernden" Basistyp ausgehend der Ableitungspfad nach "innen" verfolgt wird.

Dabei wird die Transformation für einen Klassentyp abgebrochen und für weitere, noch nicht verwendete Klassentypen fortgesetzt, sobald eine Variable in einer Typdefiniton einer Klasse einen einfachen Typ aufweist, wobei ein einfacher Typ durch ein Literal semantisch beschrieben wird. Der einfache Typ kann beispielsweise ein Integer oder ein Boolescher Ausdruck oder dergleichen sein.

Ein jeweiliger Name eines Types einer Klasse wird in eine Klasse und ein jeweiliger Variablenname in eine Eigenschaft gemäß der Web Ontology Language transformiert.

Während eines Betriebs des Automatisierungsgeräts wird die Applikation in einem vierten Schritt IV mit konkreten Werten (beispielsweise eines Sensors) verwendet, d.h. es werden Instanzen der Klassentypen angelegt, d.h. die Applikation wird instanziiert. Mit anderen Worten werden Instanzen der einzelnen zuvor transformierten Klassentypen angelegt.

In einem fünften Schritt V findet eine Transformation dieser zuvor angelegten Instanzen der Klassentypen statt. Dabei erfolgt die Transformation von einer Variablen ausgehend rekursiv von außen nach innen, und für jede Instanz eines Klassentyps wird eine Instanz gemäß der Web Ontology Language angelegt, und Variable einfacher Klassentypen bilden Werte von Literalen gemäß der Web Ontology Language.

In einem abschließenden sechsten Schritt VI werden die Ergebnisse der Transformation in dem Turtle Format in einem Datenspeicher des Automatisierungsgeräts hinterlegt. Dieses Format weist den Vorteil einer guten Lesbarkeit für einen menschlichen Anwender auf. Es sind aber auch weitere gängige Formate wie "N-Triples", "JSON-LD" oder "RDF/XML" verwendbar. Diese Formate können verlustlos aufeinander abgebildet werden.

Die Schritte IV bis VI des zuvor erläuterten Verfahrens können immer dann wiederholt werden, wenn sich die Instanziierung der Applikation ändert. Dadurch kann die Repräsentation der Applikation in der semantischen Beschreibungssprache (d.h. der Web Ontology Language) mit der geänderten Instanziierung der Applikation während eines Betriebs des Automatisierungsgerätes konsistent gehalten werden.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur automatisierten Transformation einer Applikation (2) in eine semantische Beschreibungssprache, umfassend:
a) Auswahl eines objektorientiert strukturierten Quellcodes der Applikation (2), welcher Klassen mit verschiedenen Klassentypen umfasst,
b) Festlegen, welche in dem Quellcode verwendeten Klassen transformiert werden sollen, insbesondere alle Klassen des Quellcodes,
c) Transformation aller Typen von Klassen, wobei die Transformation jeweils von einem Basistyp ausgehend rekursiv von außen nach innen zu von dem Basistyp abgeleiteten Klassentypen erfolgt, und wobei die Transformation abgebrochen wird, sobald eine Variable in einer Typdefiniton einer Klasse einen einfachen Typ aufweist, wobei ein einfacher Typ durch ein Literal semantisch beschrieben wird, und wobei jeder Typ einer Klasse nur einmal transformiert wird, und wobei ein jeweiliger Name eines Types einer Klasse in eine Klasse und ein jeweiliger Variablenname in eine Eigenschaft gemäß der Web Ontology Language transformiert wird,
d) Anlegen von Instanzen der Klassentypen,
e) Transformation der Instanzen der Klassentypen, wobei die Transformation von einer Variablen ausgehend rekursiv von außen nach innen erfolgt, und wobei für jede Instanz eines Klassentyps eine Instanz gemäß der Web Ontology Language angelegt wird, und wobei Variable einfacher Klassentypen Werte von Literalen gemäß der Web Ontology Language bilden,
e) Hinterlegung der Ergebnisse der Transformation in einem Datenspeicher.

2. Verfahren nach Anspruch 1, bei dem die Applikation zum Betrieb eines Automatisierungsgeräts (1) einer technischen Anlage verwendbar ist.

3. Verfahren nach Anspruch 1 oder 2, bei dem der Quellcode der Applikation mittels der Programmiersprache C# erstellt worden ist.

4. Verfahren nach einem der vorangegangenen Ansprüche, bei dem die Transformation der instanziierten Klassen immer dann durchgeführt wird, wenn sich eine Änderung bei der Instanziierung der Klassen ergibt, insbesondere aufgrund der Handlungen eines Projekteurs eines Automatisierungsgerätes (1) einer technischen Anlage, wobei die Applikation zum Betrieb des Automatisierungsgerätes (1) der technischen Anlage verwendet wird.

5. Verfahren nach einem der vorangegangenen Ansprüche, bei dem die Ergebnisse der Transformation in einem Turtle Format in dem Datenspeicher hinterlegt werden.

6. Verfahren nach einem der vorangegangenen Ansprüche, bei dem im Rahmen des Festlegens, welche in dem Quellcode verwendeten Klassen transformiert werden sollen, die entsprechenden Klassen mit einem Attribut versehen werden, das sie als für die Transformation vorgesehen kennzeichnet.

7. Automatisierungsgerät (1) für eine technische Anlage, das derart ausgebildet ist, dass ein Verfahren gemäß einem der Ansprüche 1 bis 6 an einer auf dem Automatisierungsgerät (1) implementierten Applikation durchgeführt werden kann.

8. Computerprogramm mit durch einen Computer ausführbaren Programmcodeanweisungen zur Implementierung des Verfahrens gemäß einem der Ansprüche 1 bis 6.

9. Speichermedium mit einem durch einen Computer ausführbaren Computerprogramm gemäß Anspruch 8.

10. Computersystem, auf dem ein Computerprogramm nach Anspruch 8 implementiert ist.
